# EUROPÄISCHE PATENTANMELDUNG

(11) **EP 3 312 472 A1**
(43) Veröffentlichungstag der Anmeldung: **25.04.2018**
(21) Anmeldenummer: 17196654.2
(22) Anmeldetag: 16.10.2017
(51) Int. Cl.: F16H 25/22, F16H 25/24

(54) **KUGELGEWINDETRIEB**

(30) Priorität: 24.10.2016 DE 102016120248
(71) Anmelder: SFS Intec Holding AG, 9435 Heerbrugg (CH)
(72) Erfinder: KUSTER, Hanspeter, 9436 Balgach (CH); ZACH, Marijo, 9443 Widnau (CH); KALB, Andreas, 6858 Schwarzach (AT); FREI, Stefan, 9443 Widnau (CH); HUTTER, Pascal, 9444 Diepoldsau (CH)

(57) **Zusammenfassung**

Ein Kugelgewindetrieb umfasst eine Spindelmutter (21), eine Gewindespindel und ein Halteelement (23). Das Halteelement (23) ist durch eine die Gewindemutter (21) in einem Endbereich aussen umgreifende Vorkragung (24) formschlüssig spielfrei mit der Gewindemutter (21) verbunden. Die Gewindemutter (21) und das als Kraftübertragungsglied fungierende Halteelement (23) werden bei der Fertigung zunächst positionsgenau angeordnet und anschliessend durch eine formschlüssige, insbesondere spielfreie, Verbindung, insbesondere durch Verstemmen, Verpressen, Clinchen oder andere Verformprozesse, verbunden.

## Beschreibung

### TECHNISCHER HINTERGRUND

Eine Kugelumlaufspindel oder auch Kugelgewindetrieb (KGT) ist die Gesamtheit eines Wälzschraubtriebes mit Kugeln als Wälzkörper. Er dient zur Umsetzung einer Drehbewegung in eine Längsbewegung und zählt damit auch zu den Linearantrieben. Die vorliegende Erfindung beschäftigt sich mit Verbesserungen bei der Herstellung von diesen, insbesondere mit einer Verbesserung der Befestigungselemente an KGTs.

### STAND DER TECHNIK

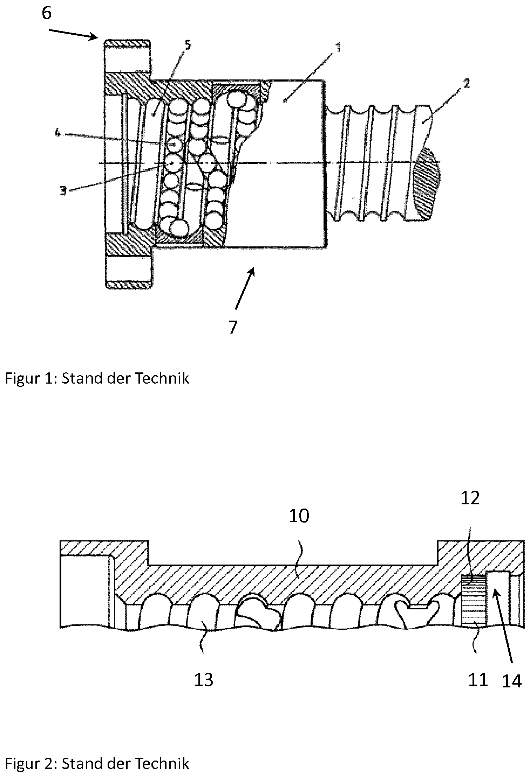

Figur 1 zeigt die Hauptbestandteile eines KGT 7, wozu eine Gewindespindel 2 und eine diese Spindel umgreifende Spindelmutter (Kugelumlaufmutter) 1 zählen. Die Spindelmutter 1 besteht aus einem Mutterkörper mit eingearbeiteten Kugelumläufen 5, die zur Geometrie der Gewindespindel 2 passend ausgelegt wird, einem Kugelrückführkanal und sogenannten Rückführhülsen. Der Mutterkörper weist Raum auf für mehrere, tragende Kugelumläufe, sprich Innengewindegänge, die zusammen mit dem Aussengewinde der Spindel den Aufnahmeraum für die tragenden Kugeln 3, 4 bilden. Bei der Kugelrückführung (häufig auch als Kugelumlenkung bezeichnet) werden durch Einsätze in der Mutter die Kugeln am Ende des Gewindegangs vollständig von der Spindel abgehoben und zum Beispiel durch eine Rückführhülse zurückgeleitet.

Der Mutterkörper wird in der Regel mit einem Flansch 6 versehen, um das Drehmoment aufbringen zu können. Wie Figur 1 als Stand der Technik zeigt, ist es möglich, diese Mutter einstückig auszuführen, um den Kraftübertrag bzw. die Befestigungsmöglichkeit zu optimieren. Dadurch wird jedoch die Herstellung der Mutter komplex, weil neben den Kugelumläufen (Innengewinde) und deren Nachbearbeitung, den Ausnehmungen für die Kugelrückführungen auch noch die Befestigungsmöglichkeiten vorgesehen werden müssen. Somit werden eine Vielzahl von Dreh-, Fräs- und Bohr-Arbeitsschritten notwendig.

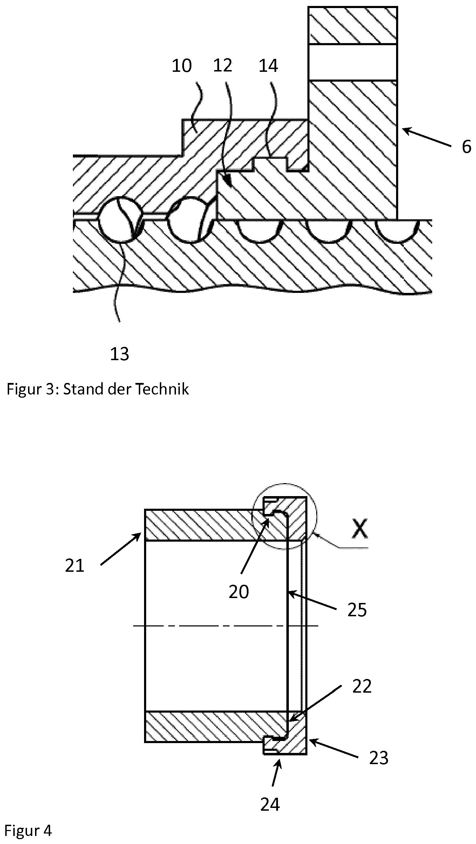

Es ist als vorteilhaft bekannt, diesen Flansch und die Mutter in separaten Herstellprozessen zu fertigen und diese form- bzw. kraftschlüssig miteinander zu verbinden. Die DE 10 2013 217 161 A1 beschreibt eine formschlüssige Verbindung zwischen einer Gewindemutter und dem dort als Kraftübertragungsglied bezeichneten Flansch. Die Verbindung zwischen der Gewindemutter und dem Flansch wird vorzugsweise spielfrei ausgebildet und erlaubt so ein besonders präzises Verfahren eines mit dem Kraftübertragungsglied verbundenen Bremskolbens. Die formschlüssige Verbindung zwischen Gewindemutter und Kraftübertragungsglied erfolgt vorzugsweise durch Clinchen bzw. Durchsetzfügen oder Verstemmen. Die Gewindemutter weist hierzu gemäss DE 10 2013 217 161 A1 (vgl. Figur 2) bevorzugt eine hülsenförmige Ausbildung an einem Ende auf mit einem Anschlagbereich 12 und einer radial umlaufende Nut 14, die eine Hinterschneidung bildet. Durch Einpressen des Flanschteiles 6 in die Gewindemutter 10 während des Fügevorgangs wird das Material des Flansches im Anschlagsbereich 12 verformt und füllt die umlaufende Nut 14 auf. Ist im Anschlagbereich 14 eine Rändelung 11 vorgesehen, so wird zudem die Verdrehsicherheit im endgültigen Zustand verbessert. Figur 3 zeigt den gefügten Zustand exemplarisch.

### NACHTEILE DES STANDES DER TECHNIK

In der Praxis hat sich gezeigt, dass der Verpressvorgang häufig nicht so masshaltig ausgeführt werden kann wie erwünscht. Grund hierfür ist, dass das Basismaterial für den Flansch 6 in das hülsenförmige Ende der Gewindemutter 10 eingeführt wird und der Pressprozess im Anschlagbereich 12 mit der Stauchung des Materials beginnt. Damit wird Material, das unmittelbar im Bereich des für die Passgenauigkeit der Fügung essentiellen Anschlagbereichs 12 liegt, für die Sicherung der Fügung umgeformt. Die erforderliche Parallelität von Flansch 6 mit der Ebene, die durch den Anschlagbereich 12 markiert wird, ist damit nicht mehr sicher gegeben .Der Anschlagbereich ist jedoch entscheidend für die Masshaltigkeit der Fügung, insbesondere das axiale Fluchten der Spindelmutter 10 mit dem Flansch 6.

### BESCHREIBUNG DER ERFINDUNG

Die vorliegende Erfindung hat es sich zum Ziel gesetzt, die Nachteile des Standes der Technik zu vermeiden, insbesondere eine Vorrichtung und ein Verfahren vorzuschlagen zur sicheren und masshaltigen Verbindung eines Flansches und einer Gewindemutter eines Kugelgewindetriebes.

Dies wird durch die Merkmale des kennzeichnenden Teils von Anspruch 1 und 5 erzielt. Weitere, vorteilhafte Ausgestaltungen ergeben sich aus den Unteransprüchen.

Erfindungsgemäss, und im Kontrast zum Stand der Technik wird vorgeschlagen, die form- und kraftschlüssige Verbindung durch eine andere Anordnung und Prozessführung im Fügevorgang zu erzielen. Vereinfacht gesprochen wird beim oben beschriebenen Stand der Technik die Positionierung des Flansches bzw. Kraftübertragungsgliedes relativ zur Gewindemutter durch bzw. am Ende des Verpress- bzw. Verstemmprozesses erzielt. Die vorliegende Erfindung schlägt dagegen vor, dass die Verstemmung / Verpressung / Clinchen / Durchsetzfügung erst nach der exakten Positionierung erfolgt.

Dies wird erzielt, indem ein oder mehrere Fügebereich(e) 20 nicht mehr unmittelbar benachbart und/oder im Innenbereich der Gewindemutter 21 angeordnet werden, sondern an deren Aussenumfang. Beim Fügevorgang gemäss vorliegender Erfindung wird zunächst ein Haltelement 23, das ein Flansch oder eine rohrförmige Verlängerung sein kann, auf die Spindelmutter 21 aufgeschoben. Hierzu weist das Halteelement 23 einen oder mehrere vorkragende Bereiche 24 auf, die aus Sicht des Haltelementes 23 ein Ende der Spindelmutter 21 umgreifen bzw. über die Positionierebene 25 hinaus in den Bereich des Mutterkörpers vorkragen. Die Vorkragung 24 kann dabei aus einzelnen zungenähnlichen Elementen oder auch aus einer vollständig ringförmigen Vorkragung, ähnlich einer Muffe, bestehen. Die lichte Öffnung der Vorkragung 24 kann dem Aussendurchmesser der Spindelmutter 21 entsprechen oder mit leichten Über- bzw. Untermass ausgeführt sein.

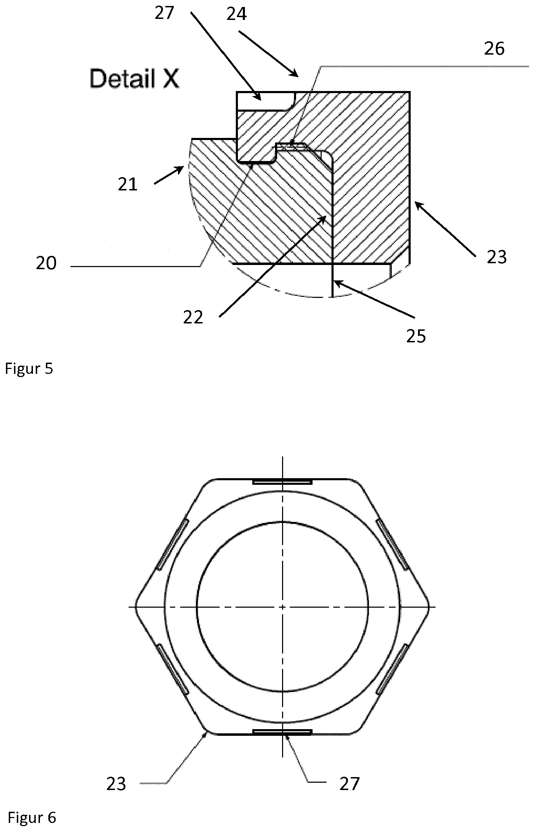

Das Aufschieben des Haltelementes 23 auf die Spindelmutter 21 wird durchgeführt, bis ein passgenauer Sitz von Haltelement 23 auf dem Spindelmutterkörper im Anschlagbereich 22 bzw. der Positionierebene 25 erreicht wurde. Dann wird durch äussere Krafteinwirkung auf die Vorkragung 24 ein Formschluss und Kraftschluss zwischen Haltelement 23 und Spindelmutter 21 erzielt. Diese Krafteinwirkung kann als Verstemmen, Clinchen oder Durchsetzfügen realisiert werden. Die Krafteinwirkung kann auf die gesamte Berührungslänge zwischen Haltelement 23 und Spindelmutter 21 erfolgen oder auch nur abschnittsweise, wie in Figur 6 angedeutet. Bevorzugt wird durch diese Krafteinwirkung die Fügung alleine bewirkt, je nach Einsatzprofil können jedoch Schweissungen, Verklebungen, Abdichtungen unterstützend angewendet werden.

Figur 5 zeigt exemplarisch ein Detail aus Figur 4 im gefügten Bereich. Hier wurden, in einer Weiterbildung der Erfindung, am Aussenumfang der Spindelmutter 21 verschiedene Massnahmen getroffen, die die Verbindung von Spindelmutter 21 und Haltelement 23 verstärken können. Eine umlaufende Nut 26 im Aussenumfang der Spindelmutter 21 bzw. im Fügebereich 20 schafft Raum für das verpresste bzw. verstemmte Material und wirkt somit als Verfüllbereich 26. Merkmal 27 beschreibt den durch die Krafteinwirkung verformten Bereich des Haltelements 23. Im Verfüllbereich 26 kann eine Aufrauhung, Rändelung oder anderweitige Oberflächenbehandlung oder -beschichtung vorgesehen werden, die nach dem Verpressen / Verstemmen die Fügung unterstützt.

Das Halteelement 23 kann als Flansch ausgeführt werden, wie in Figur 1 angedeutet und entsprechende Bohrungen für Verschraubungen aufweisen. Alternativ kann das Haltelement in jeder Form ausgeführt werden, die konstruktiv die gewünschte Funktion erfüllt. Die Haltefunktion kann durch Klemmen, Verschrauben, Verstiften, Verschweissen, Verkleben etc. erzielt werden oder mittels eines integrierten Bolzens zur Drehmomentübertragung. Figur 6 zeigt eine Ausführung des Haltelements 23 als Sechskant. Die Einformungen 27 wurden durch die Krafteinwirkung beim Fügen der Gewindemutter 21 mit jenem Haltelement 23 erzielt.

### FIGURENBESCHREIBUNG

Fig. 1 Stand der Technik eines Kugelgewindetriebes
Fig. 2 ist ein Schnitt durch eine Spindelmutter gemäss Stand der Technik
Fig. 3 zeigt ein Flanschdetail aus Figur 2
Fig. 4 zeigt eine Ausführung der Erfindung
Fig. 5 zeigt ein Detail X aus Figur 4
Fig. 6 zeigt eine axiale Draufsicht auf einen erfindungsgemässen Flansch

Die Erfindung wird durch die beigefügten Zeichnungen näher erläutert. Figur 1 zeigt als Stand der Technik einen Kugelgewindetrieb 7 mit einer Gewindespindel 2 und eine diese Spindel umgreifende Spindelmutter (Kugelumlaufmutter) 1. Der Mutterkörper weist eingearbeitete Kugelumläufe 5 auf, die zur Geometrie der Gewindespindel 2 passend ausgelegt sind. Der Mutterkörper weist mehrere, tragende Kugelumläufe 5, sprich Innengewindegänge, auf, die zusammen mit dem Aussengewinde der Spindel den Aufnahmeraum für die tragenden Kugeln 3, 4 bilden. Bei der Kugelrückführung (häufig auch als Kugelumlenkung bezeichnet) werden durch Einsätze in der Mutter die Kugeln am Ende des Gewindegangs vollständig von der Spindel abgehoben und zum Beispiel durch eine Rückführhülse zurückgeleitet. Ein Flansch 6 wirkt als Drehmomentübertragung.

Figur 2 zeigt eine hülsenförmige Gewindemutter 10 in alternativer Ausführung (noch) ohne Drehmomentstütze. Die Schnittzeichnung zeigt eine hülsenförmige Ausbildung an einem Ende der Spindelmutter mit einem Anschlagbereich 12 und einer radial umlaufende Nut 14, die eine Hinterschneidung bildet. Merkmal 13 ist eine Kugelrille.

Figur 3 zeigt die Spindelmutter 10 aus Figur 2 mit verpresstem Flansch 6. Während des Fügevorgangs wird das Material des Flansches im Anschlagsbereich 12 verformt und füllt die umlaufende Nut 14 zumindest teilweise am Umfang auf. Damit bilden Flansch 6 und Gewindemutter 10 eine gefügte Einheit, wobei dieser Verpressvorgang die Masshaltigkeit der Gesamtverbindung beeinträchtigt. Ist im Anschlagbereich 14 eine Rändelung 11 vorgesehen, so wird zudem die Drehmomentübertragung im endgültigen Zustand verbessert.

Figur 5 und im Detail Figur 6 zeigen eine gefügte Verbindung aus einem Flansch- oder Halteelement 23 mit einer Spindelmutter 21 gemäss der Erfindung. Bei der Herstellung wird das Halteelement 23 auf die Spindelmutter 21 aufgeschoben. Sobald ein passgenauer Sitz im Anschlagbereich 22 bzw. der Positionierebene 25 erreicht wurde, wird die Vorkragung 24 auf die Spindelmutter 21 verpresst. Dabei wird nur Material aus der Vorkragung 24 bzw. dem Randbereich des Mutterkörpers betroffen, im Bereich der für die Passgenauigkeit verantwortlichen Anschlagbereich 22 findet keine Umformung statt. Der Fügebereich 20 ist der Passung 22 abgewandt, daher wirken sich die Umformungen nicht aus.

Figur 6 zeigt ein Halteelement 23 / Flansch in Draufsicht im verbauten Zustand mit Einformungen 27, hier: Pressmarken.

### BEZUGSZEICHENLISTE

- 1: Spindelmutter
- 2: Gewindespindel
- 3: Kugel
- 4: Kugel
- 5: Kugelumläufe
- 6: Flansch
- 7: Kugelgewindetrieb
- 10: Spindelmutter, alternative Ausführung
- 11: Rändelung
- 12: Anschlagbereich
- 13: Rille
- 14: radial umlaufende Innennut
- 20: Fügebereich
- 21: Spindelmutter
- 22: Anschlagbereich
- 23: Halteelement, Flansch
- 24: Vorkragung
- 25: Positionierebene
- 26: Verfüllbereich
- 27: Einformung

## Patentansprüche

1. Kugelgewindetrieb mit einer Spindelmutter (21), die in einem Fügebereich (20) eine aussen umlaufende Nut aufweist, einer Gewindespindel (2) sowie einem Halteelement (23), **dadurch gekennzeichnet, dass** das Halteelement (23) einen passgenauen Sitz auf der Spindelmutter (21) in einem Anschlagbereich (22) aufweist und durch eine die Gewindemutter (21) in einem Endbereich aussen umgreifende Vorkragung (24) formschlüssig und spielfrei mit der Gewindemutter (21) verbunden ist.

2. Kugelgewindetrieb nach Anspruch 1, **dadurch gekennzeichnet, dass** bei der Herstellung der formschlüssigen Verbindung von Gewindemutter (21) und Halteelement (23) Material des Haltelements (23) in einen Verfüllbereich (26) eingedrückt wird.

3. Kugelgewindetrieb nach Anspruch 1-2, **dadurch gekennzeichnet, dass** die formschlüssige Verbindung des Haltelements (23) an der Spindelmutter (21) durch Aufrauhung, Rändelung oder anderweitige Oberflächenbehandlung oder -beschichtung im Verfüllbereich (26) unterstützt wird.

4. Verfahren zur Herstellung eine Kugelgewindetriebes, insbesondere nach einem der Ansprüche 1 bis 3, das eine Gewindespindel (2), eine Spindelmutter (21) und Halteelement (23) aufweist, **dadurch gekennzeichnet, dass** die Gewindemutter (21) und das als Kraftübertragungsglied fungierende Halteelement (23) bei der Fertigung zunächst positionsgenau angeordnet werden, indem das Haltelement (23) im Anschlagbereich 22 in einen passgenauen Sitz auf dem Spindelmutterkörper aufgeschoben wird und anschliessend durch eine formschlüssige, insbesondere spielfreie, Verbindung, insbesondere durch Verstemmen, Verpressen, Clinchen oder andere Verformprozesse verbunden werden.
